(19) Europäisches Patentamt
European Patent Office
Office européen des brevets

(11) **EP 4 411 601 A1**

(12) **EUROPEAN PATENT APPLICATION**
published in accordance with Art. 153(4) EPC

(43) Date of publication:
**07.08.2024 Bulletin 2024/32**

(21) Application number: **21959264.9**

(22) Date of filing: **28.09.2021**

(51) International Patent Classification (IPC):
**G06N 20/00** (2019.01)

(52) Cooperative Patent Classification (CPC):
**G06N 20/00**

(86) International application number:
**PCT/JP2021/035678**

(87) International publication number:
**WO 2023/053216 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: FUJITSU LIMITED
**Kawasaki-shi, Kanagawa 211-8588 (JP)**

(72) Inventors:
• **OKAWA, Yoshihiro**
**Kawasaki-shi, Kanagawa 211-8588 (JP)**
• **YOKOTA, Yasuto**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **MACHINE LEARNING PROGRAM, MACHINE LEARNING METHOD, AND MACHINE LEARNING DEVICE**

(57) A machine learning apparatus inputs pieces of data to a machine learning model, and acquires prediction results of the pieces of data. The machine learning apparatus generates one or more pieces of data based on first data of which the prediction result indicates a first group among the pieces of data. The machine learning apparatus executes clustering of the pieces of data and the one or more pieces of data based on features of the pieces of data and the one or more pieces of data, which are obtained based on a parameter of the machine learning model. The machine learning apparatus updates the parameter of the machine learning model based on training data including the pieces of data and the one or more pieces of data for which results of the clustering are used as ground truth labels.

FIG. 2

**EP 4 411 601 A1**

**Description**

FIELD

The embodiment discussed herein is related to a technique for machine learning using training data.

BACKGROUND

A machine learning model is used in a case where data is determined or classified in an information system of a company or the like. Since the machine learning model performs the determination and the classification based on training data used for machine learning, when a tendency of data changes during an operation, performance of the machine learning model deteriorates.

For maintaining the performance of the machine learning model, in a case where a percentage of correct answers or the like of the machine learning model decreases, pieces of data to which ground truth labels are assigned are generated, and the machine learning of the machine learning model is executed again.

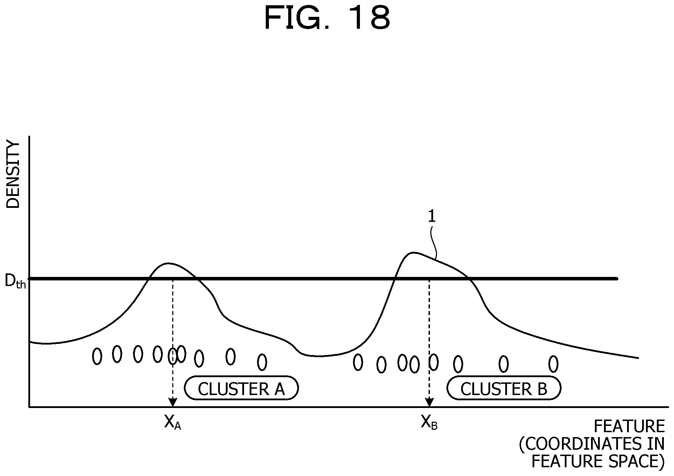

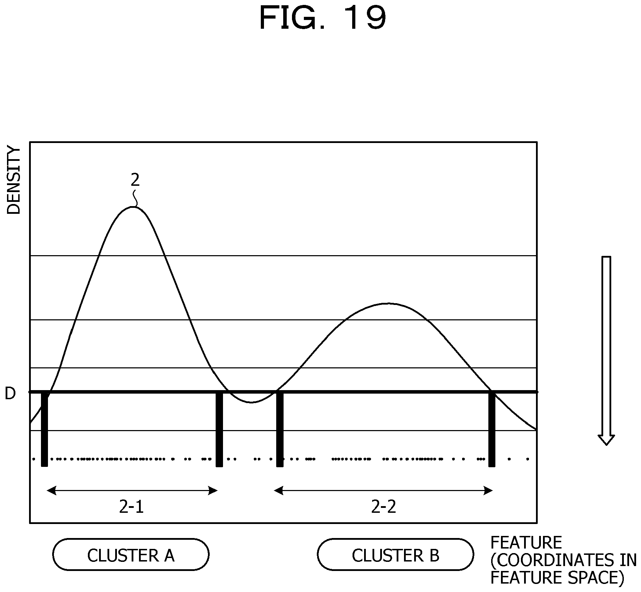

FIGs. 18 and 19 are diagrams for describing a related art in which ground truth labels are automatically assigned to pieces of data. An apparatus that executes the related art is referred to as a "related-art apparatus".

Processing before an operation is started will be described with reference to FIG. 18. A vertical axis in FIG. 18 is an axis corresponding to a density of pieces of data in a feature space. A horizontal axis is an axis corresponding to a feature (coordinates in the feature space). A line 1 indicates a relationship between the coordinates in the feature space and the density of the pieces of data corresponding to the coordinates. The related-art apparatus maps pieces of data before a tendency changes to a feature space and calculates a density of pieces of mapped data. The related-art apparatus executes clustering, and records the number of clusters and center coordinates of a region where a density is equal to or more than a threshold value $D_{th}$ in each cluster.

In the example illustrated in FIG. 18, the pieces of data in the feature space are classified into a cluster A and a cluster B. For the cluster A, center coordinates of the region where the density is equal to or more than the threshold value $D_{th}$ are denoted by $X_A$. For the cluster B, center coordinates of the region where the density is equal to or more than the threshold value $D_{th}$ are denoted by $X_B$. In this case, the related-art apparatus records "2" as the number of clusters, the center coordinates $X_A$ of the cluster A, and the center coordinates $X_B$ of the cluster B.

Processing after the operation is started will be described with reference to FIG. 19. A vertical axis in FIG. 19 is an axis corresponding to a density of pieces of data in a feature space. A horizontal axis is an axis corresponding to a feature (coordinates in the feature space). A line 2 indicates a relationship between the coordinates in the feature space and the density of the pieces of data corresponding to the coordinates. After the operation is started, the related-art apparatus maps pieces of data used in the operation to the feature space, and calculates a density of pieces of mapped data. The related-art apparatus decreases a threshold value of the density and searches for a minimum threshold value at which the number of clusters is the same as the number of clusters recorded before the operation is started.

The number of clusters before the operation is started is set to "2" by using the example described with reference to FIG. 18. The related-art apparatus adjusts the number of clusters of pieces of data (pieces of data mapped to the feature space) used in the operation to "2" by gradually decreasing the threshold value of the density and setting the threshold value to D. The related-art apparatus extracts (clusters) pieces of data included in a region 2-1 and pieces of data included in a region 2-2.

The related-art apparatus assigns the ground truth labels to the pieces of data by performing matching based on a total of movement distances between center coordinates stored before the operation and center coordinates of a cluster after the operation is started or the like. For example, by such matching, a cluster of the region 2-1 is associated with the cluster A, and a cluster of the region 2-2 is associated with the cluster B. In this case, the related-art apparatus assigns a ground truth label "class A" to each piece of data in the region 2-1 and assigns a ground truth label "class B" to each piece of data in the region 2-2.

SUMMARY

TECHNICAL PROBLEM

However, in the above-described related art, there is a problem that the ground truth labels may not be automatically assigned in a case where the number of pieces of data belonging to a certain class is small.

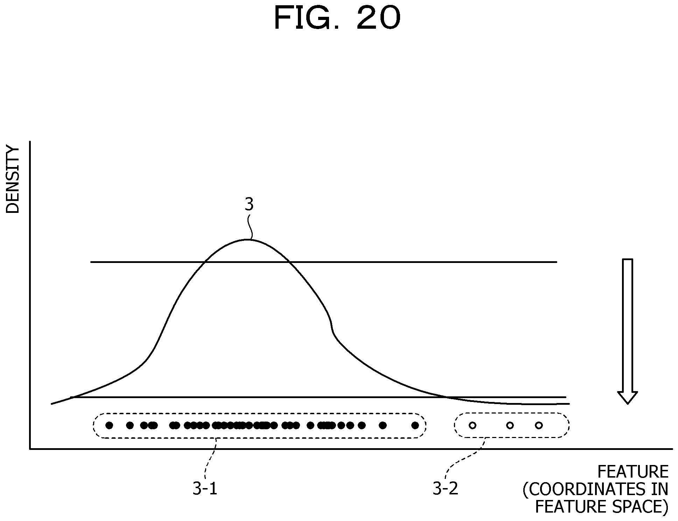

FIG. 20 is a diagram for describing the problem of the related art. A vertical axis in FIG. 20 is an axis corresponding to a density of pieces of data in a feature space. A horizontal axis is an axis corresponding to a feature (coordinates in the feature space). A line 3 indicates a relationship between the coordinates in the feature space and the density of the pieces of data corresponding to the coordinates. It is assumed that in the example illustrated in FIG. 20, in a case where data is input to the machine learning model, the data is classified into a class of "normal data" or "anomaly data".

It is assumed that in FIG. 20, pieces of data included in a region 3-1 belong to the class of "normal data", and pieces of data included in a region 3-2 belong to the class of "anomaly data". As described in FIG. 19, when the number of pieces of data included in the region 3-2 is significantly small, even though the threshold value is decreased, the number of clusters does not become the same as the number of clusters recorded before the operation is started, and the clustering may not be correctly performed. Thus, in a case where the number of pieces of data belonging to a certain class is small, the ground truth labels may not be automatically assigned.

Even in a case where the number of samples is significantly different between classes into which pieces of data in operation are classified when the pieces of data are input to the machine learning model, the clustering may not be correctly performed, and the ground truth labels may not be automatically assigned.

In an aspect, an object of the disclosure is to provide a machine learning program, a machine learning method, and a machine learning apparatus capable of automatically assigning ground truth labels even in a case where the number of pieces of data belonging to a certain class is small.

SOLUTION TO PROBLEM

According to a first proposal, a machine learning program causes a computer to execute processing of inputting a plurality of pieces of data to a machine learning model, and acquiring a plurality of prediction results of the plurality of pieces of data. The machine learning program causes the computer to execute processing of generating one or more pieces of data based on first data of which the prediction result indicates a first group among the plurality of pieces of data. The machine learning program causes the computer to execute processing of executing clustering of the plurality of pieces of data and the one or more pieces of data based on a plurality of features of the plurality of pieces of data and the one or more pieces of data, which are obtained based on a parameter of the machine learning model. The machine learning program causes the computer to execute processing of updating the parameter of the machine learning model based on training data including the plurality of pieces of data and the one or more pieces of data for which results of the clustering are used as ground truth labels.

ADVANTAGEOUS EFFECTS OF INVENTION

Even in a case where the number of pieces of data belonging to a certain class is small, the ground truth labels may be automatically assigned.

BRIEF DESCRIPTION OF DRAWINGS

FIG. 1 is a diagram for describing an approach and a problem when pseudo-anomaly data is generated.
FIG. 2 is a diagram for describing processing of generating the pseudo-anomaly data.
FIG. 3 is a functional block diagram illustrating a configuration of a machine learning apparatus according to the present embodiment.
FIG. 4 is a diagram illustrating an example of a data structure of training data.
FIG. 5 is a diagram (1) for describing processing of a label assignment unit.
FIG. 6 is a diagram (2) for describing processing of the label assignment unit.
FIG. 7 is a diagram (3) for describing processing of the label assignment unit.
FIG. 8 is a diagram (4) for describing processing of the label assignment unit.
FIG. 9 is a diagram (5) for describing processing of the label assignment unit.
FIG. 10 is a diagram for describing deterioration determination of a deterioration detection unit.
FIG. 11 is a flowchart illustrating a processing procedure of the machine learning apparatus according to the present embodiment.
FIG. 12 is a diagram illustrating a change in tendency of data due to a change in an external environment.
FIG. 13 is a diagram (1) illustrating verification results.
FIG. 14 is a diagram illustrating an example of changes in area under curve (AUC) scores of cameras.
FIG. 15 is a diagram illustrating examples of pieces of data generated by different generation methods.
FIG. 16 is a diagram (2) illustrating the verification results.
FIG. 17 is a diagram illustrating an example of a hardware configuration of a computer that implements functions similar to functions of the machine learning apparatus according to the embodiment.
FIG. 18 is a diagram (1) for describing the related art in which ground truth labels are automatically assigned to pieces of data.

FIG. 19 is a diagram (2) for describing the related art in which the ground truth labels are automatically assigned to the pieces of data.

FIG. 20 is a diagram for describing a problem of the related art.

## DESCRIPTION OF EMBODIMENTS

Hereinafter, an embodiment of a machine learning program, a machine learning method, and a machine learning apparatus disclosed in the present application will be described in detail with reference to the drawings. The disclosure is not limited by the embodiment.

## EXAMPLES

It is assumed that a machine learning apparatus according to the present embodiment uses a machine learning model that classifies input data into either an anomaly class or a normal class. For example, data to be input to the machine learning model is image data or the like. The machine learning model is a deep neural network (DNN) or the like. Data classified into the normal class is referred to as "normal data". Data classified into the anomaly class is referred to as "anomaly data".

The machine learning apparatus automatically assigns a ground truth label to data by generating pieces of pseudo anomaly data by using the anomaly data and the normal data classified during an operation and by executing clustering including the pseudo anomaly data. In the following description, the pseudo anomaly data is referred to as "pseudo-anomaly data".

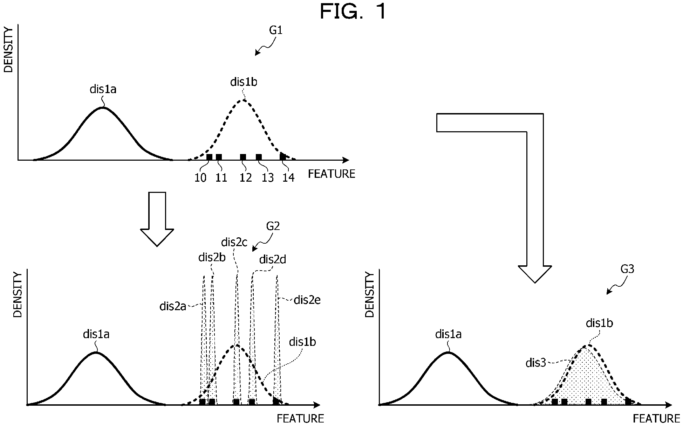

FIG. 1 is a diagram for describing an approach and a problem when the pieces of pseudo-anomaly data are generated. When the pieces of pseudo-anomaly data are generated, ground truth labels may not be automatically assigned depending on generation methods.

In FIG. 1, a vertical axis in graphs G1, G2, and G3 is an axis corresponding to a density of pieces of data in a feature space of data. A horizontal axis is an axis corresponding to a feature (coordinates in the feature space). For example, data is input to the machine learning model, and a vector output from a layer a predetermined number of layers before an output layer of the machine learning model becomes the feature. The coordinates of the data in the feature space are determined in accordance with the feature.

In the graph G1, a distribution dis1a indicates a "distribution of pieces of normal data". The pieces of normal data in the feature space are not illustrated. A distribution dis1b indicates a "distribution of pieces of true anomaly data". For example, it is assumed that the pieces of anomaly data in the feature space are pieces of anomaly data 10, 11, 12, 13, and 14. When the number of pieces of anomaly data is small, the distribution of the pieces of anomaly data does not become the distribution dis1b, and ground truth labels may not be automatically assigned as described in FIG. 20.

In order to increase the number of pieces of anomaly data, when pieces of image data identical to pieces of data (image data) corresponding to the pieces of anomaly data 10, 11, 12, 13, and 14 are simply duplicated, distributions of the pieces of anomaly data become distributions dis2a, dis2b, dis2c, dis2d, and dis2e illustrated in the graph G2. Since the distributions dis2a, dis2b, dis2c, dis2d, and dis2e are different from the distribution dis1b of the pieces of true anomaly data, clustering fails, and a ground truth label may not be automatically assigned to the data.

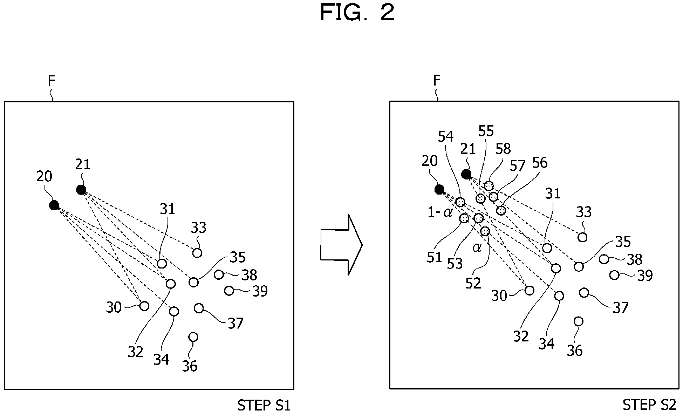

On the other hand, as illustrated in the graph G3 of FIG. 1, the machine learning apparatus generates pseudo-anomaly data such that the distribution of the pieces of anomaly data approaches the distribution dis1b of the pieces of true anomaly data. For example, the machine learning apparatus executes processing described later with reference to FIG. 2 to generate pieces of pseudo-anomaly data, and thus, the distribution of the pieces of anomaly data becomes a distribution dis3.

FIG. 2 is a diagram for describing processing of generating pieces of pseudo-anomaly data. For example, in a case where pieces of pseudo-anomaly data are generated, the machine learning apparatus executes processing in the order of steps S1 and S2.

Processing of step S1 executed by the machine learning apparatus will be described. The machine learning apparatus maps, to a feature space F, a plurality of pieces of data included in operation data. For example, the machine learning apparatus inputs the data to the machine learning model, and sets, as a value obtained by mapping the data, the feature output from the layer a predetermined number of layers before the output layer of the machine learning model. Coordinates in the feature space F are determined by the feature. Pieces of anomaly data mapped to the feature space F are referred to as pieces of anomaly data 20 and 21. Pieces of normal data mapped to the feature space F are referred to as pieces of normal data 31, 32, 33, 34, 35, 36, 37, 38, and 39. Processing of the machine learning apparatus will be described by using the pieces of anomaly data 20 and 21 and the pieces of normal data 30 to 39.

The machine learning apparatus selects the pieces of normal data similar to the anomaly data in the feature space F. In the feature space F, the pieces of normal data having a distance to the anomaly data less than a threshold value are set as the pieces of normal data similar to the anomaly data.

The machine learning apparatus compares the anomaly data 20 with the pieces of normal data 30 to 39, and selects the pieces of normal data 30, 31, 32, and 34 similar to the anomaly data 20. The machine learning apparatus compares the anomaly data 21 with the pieces of normal data 30 to 39, and selects the pieces of normal data 30, 32, 33, and 35 similar to the anomaly data 21.

Processing of step S2 executed by the machine learning apparatus will be described. For each of the pieces of normal data selected in step S1, the machine learning apparatus generates pseudo-anomaly data by combining the normal data with the anomaly data by linear combination with a proportion $\alpha$ as a uniform random number. For example, the machine learning apparatus generates pseudo-anomaly data by using $\alpha$-blending or the like.

The machine learning apparatus generates pseudo-anomaly data 51 corresponding to coordinates (feature) obtained by dividing a line segment coupling the anomaly data 20 and the normal data 30 by "1-$\alpha$:$\alpha$". The machine learning apparatus generates pseudo-anomaly data 52 corresponding to coordinates (feature) obtained by dividing a line segment coupling the anomaly data 20 and the normal data 34 by "1-$\alpha$:$\alpha$". The machine learning apparatus generates pseudo-anomaly data 53 corresponding to coordinates (feature) obtained by dividing a line segment coupling the anomaly data 20 and the normal data 32 by "1-$\alpha$:$\alpha$". The machine learning apparatus generates pseudo-anomaly data 54 corresponding to coordinates (feature) obtained by dividing a line segment coupling the anomaly data 20 and the normal data 31 by "1-$\alpha$:$\alpha$".

The machine learning apparatus generates pseudo-anomaly data 55 corresponding to coordinates (feature) obtained by dividing a line segment coupling the anomaly data 21 and the normal data 30 by "1-$\alpha$:$\alpha$". The machine learning apparatus generates pseudo-anomaly data 56 corresponding to coordinates (feature) obtained by dividing a line segment coupling the anomaly data 21 and the normal data 32 by "1-$\alpha$:$\alpha$". The machine learning apparatus generates pseudo-anomaly data 57 corresponding to coordinates (feature) obtained by dividing a line segment coupling the anomaly data 21 and the normal data 35 by "1-$\alpha$:$\alpha$". The machine learning apparatus generates pseudo-anomaly data 58 corresponding to coordinates (feature) obtained by dividing a line segment coupling the anomaly data 21 and the normal data 33 by "1-$\alpha$:$\alpha$".

After the machine learning apparatus executes the processing described in FIG. 2 to generate the pseudo-anomaly data, a distribution of pieces of anomaly data including the pseudo-anomaly data becomes the distribution dis3 described in FIG. 1. Thus, when clustering is executed based on the features of the normal data, the anomaly data, and the pseudo-anomaly data, the machine learning apparatus may associate a result of this clustering with a clustering result based on features of pieces of training data. Accordingly, even in a case where the number of pieces of data (for example, anomaly data) belonging to a certain class is small, ground truth labels may be automatically assigned.

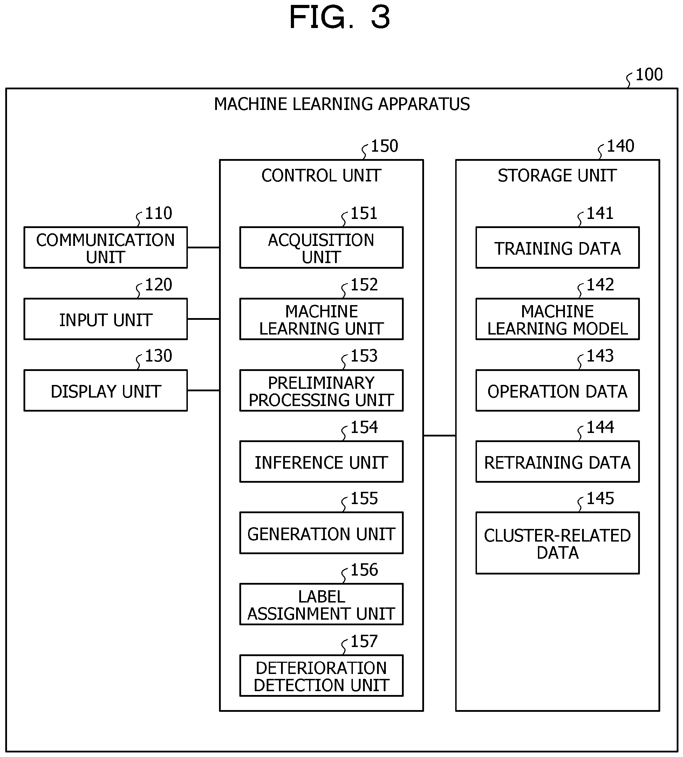

Next, an example of a configuration of the machine learning apparatus according to the present embodiment will be described. FIG. 3 is a functional block diagram illustrating the configuration of the machine learning apparatus according to the present embodiment. As illustrated in FIG. 3, a machine learning apparatus 100 includes a communication unit 110, an input unit 120, a display unit 130, a storage unit 140, and a control unit 150.

The communication unit 110 performs data communication with an external apparatus via a network. For example, the communication unit 110 receives training data 141, operation data 143, and the like from the external apparatus. The machine learning apparatus 100 may accept the training data 141 and the operation data 143 from the input unit 120 to be described later.

The input unit 120 is an interface for inputting data. The input unit 120 accepts input of pieces of data via input devices such as a mouse and a keyboard.

The display unit 130 is an interface for outputting data. For example, the display unit 130 outputs data to an output device such as a display.

The storage unit 140 includes the training data 141, a machine learning model 142, the operation data 143, retraining data 144, and cluster-related data 145. The storage unit 140 is an example of a storage device such as a memory.

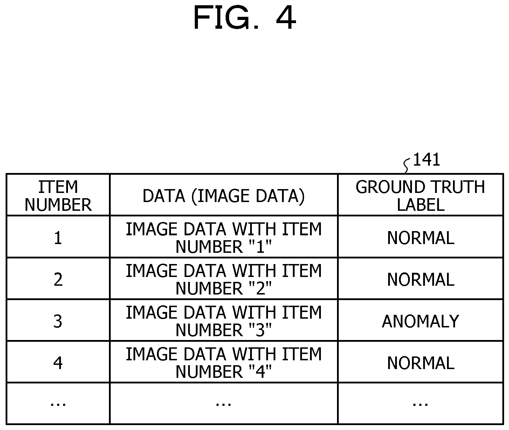

The training data 141 is used in a case where machine learning of the machine learning model 142 is executed. FIG. 4 is a diagram illustrating an example of a data structure of the training data. As illustrated in FIG. 4, in the training data, an item number, data, and a ground truth label are associated with each other. The item number is a number for identifying a record of the training data 141. The data is image data. The ground truth label is a label indicating whether the data is normal or anomaly.

For example, since a ground truth label of data with an item number "1" is "normal", the data with the item number "1" is normal data. Since a ground truth label of data with an item number "3" is "anomaly", the data with the item number "3" is anomaly data.

The machine learning model 142 is the DNN or the like, and includes an input layer, hidden layers, and an output layer. Machine learning is executed on the machine learning model 142 based on an error back propagation method or the like.

When data is input to the machine learning model 142, a classification result indicating whether the input data is normal or anomaly is output.

The operation data 143 is a data set including a plurality of pieces of data used during an operation.

The retraining data 144 is training data to be used in a case where the machine learning of the machine learning model 142 is executed again.

The cluster-related data 145 includes the number of clusters and center coordinates of a region where a density is equal to or more than a threshold value in each cluster in a case where each piece of data included in the training data 141 is mapped to the feature space. The cluster-related data 145 has center coordinates of each cluster based on a clustering result of a label assignment unit 156 to be described later.

The control unit 150 includes an acquisition unit 151, a machine learning unit 152, a preliminary processing unit 153, an inference unit 154, a generation unit 155, the label assignment unit 156, and a deterioration detection unit 157.

The acquisition unit 151 acquires the training data 141 from the external apparatus or the input unit 120, and stores the training data 141 in the storage unit 140. The acquisition unit 151 acquires the operation data 143 from the external apparatus or the input unit 120, and stores the operation data 143 in the storage unit 140.

The machine learning unit 152 executes the machine learning of the machine learning model 142 by the error back propagation method by using the training data 141. The machine learning unit 152 trains the machine learning model 142 such that in a case where each piece of data of the training data 141 is input to the input layer of the machine learning model 142, an output result output from the output layer approaches a ground truth label of the input data. The machine learning unit 152 verifies the machine learning model 142 by using verification data.

The data of the training data 141 is mapped to the feature space, and clustering is executed. Accordingly, the preliminary processing unit 153 specifies the number of clusters of the data before the start of the operation and the center coordinates of the region where the density is equal to or more than the threshold value in the cluster. For example, the preliminary processing unit 153 records the number of clusters and the center coordinates of each cluster in the cluster-related data 145.

The preliminary processing unit 153 maps each piece of data included in the training data 141 to the feature space. For example, the preliminary processing unit 153 inputs each piece of data of the training data 141 to the machine learning model 142, and sets, as a value obtained by mapping the data, the feature output from the layer a predetermined number of layers before the output layer of the machine learning model 142. This feature is a value obtained based on a parameter of the trained machine learning model 142. Coordinates in the feature space F are determined by the feature.

By using Expression (1), the preliminary processing unit 153 calculates the density of the pieces of data in the feature space. In Expression (1), N represents a total number of pieces of data, and $\sigma$ represents a standard deviation. x is an expected value (average value) of the features of the pieces of data, and $x_j$ indicates a feature of j-th data.

[Math. 1]

$$\text{Gauss\_density}(x) = \frac{1}{N\left(\sqrt{2\pi}\sigma\right)^d} \sum_{j=0}^{N-1} exp\left(-\frac{\|x - x_j\|^2}{2\sigma^2}\right) \qquad \cdots (1)$$

Although a case where the preliminary processing unit 153 calculates a Gaussian density as the density of the pieces of data has been described, the disclosure is not limited thereto, and the density may be calculated by using eccentricity, a K-Nearest Neighbor Algorithm (KNN) distance, or the like.

The preliminary processing unit 153 generates a graph in which a vertical axis indicates a density and a horizontal axis indicates a feature. The graph generated by the preliminary processing unit 153 corresponds to the graph described in FIG. 18. The preliminary processing unit 153 executes clustering, and records the number of clusters and center coordinates of the region where the density is equal to or more than a threshold value $D_{th}$ in each cluster.

In the example illustrated in FIG. 18, the pieces of data in the feature space are classified into a cluster A and a cluster B. For example, the cluster A is a cluster to which the normal data belongs. The cluster B is a cluster to which the anomaly data belongs. For the cluster A, center coordinates of the region where the density is equal to or more than the threshold value $D_{th}$ are denoted by $X_A$. For the cluster B, center coordinates of the region where the density is equal to or more than the threshold value $D_{th}$ are denoted by $X_B$. In this case, the preliminary processing unit 153 records "2" as the number of clusters, the center coordinates $X_A$ of the cluster A, and the center coordinates $X_B$ of the cluster$_B$ in the cluster-related data 145.

Although a case where the preliminary processing unit 153 specifies the number of clusters and the center coordinates of each cluster has been described, the number of clusters and the center coordinates of each cluster may be acquired in advance from the external apparatus.

The inference unit 154 infers whether the input data is the normal data or the anomaly data by acquiring the data from the operation data 143 and inputting the acquired data to the machine learning model 142. For each piece of data included in the operation data 143, the inference unit 154 repeatedly executes the above-described processing.

For each piece of data in the operation data 143, the inference unit 154 sets an estimation result indicating whether the data is the normal data or the anomaly data, and outputs the estimation result to the generation unit 155. The inference unit 154 may output the inference result to the display unit 130 to display the inference result.

The generation unit 155 generates the pseudo-anomaly data by executing the processing described in FIG. 2. An example of the processing of the generation unit 155 will be described below.

The generation unit 155 maps a plurality of pieces of data included in the operation data 143 to the feature space F. For example, the generation unit 155 inputs the data to the machine learning model 142, and sets, as the value obtained by mapping the data, the feature output from the layer a predetermined number of layers before the output layer of the machine learning model 142. This feature is a value obtained based on a parameter of the trained machine learning model 142. For example, the pieces of anomaly data and the pieces of normal data mapped to the feature space are the pieces of anomaly data 20 and 21 and the pieces of normal data 30 to 39 illustrated in FIG. 2. The generation unit 155 specifies whether the data is the anomaly data or the normal data based on the inference result of the inference unit 154.

The generation unit 155 selects the pieces of normal data similar to the anomaly data in the feature space F. In the feature space F, the pieces of normal data having a distance to the anomaly data less than a threshold value are set as the pieces of normal data similar to the anomaly data. For example, in FIG. 2, the generation unit 155 selects the pieces of normal data 30, 31, 32, and 34 as the pieces of normal data similar to the anomaly data 20. The generation unit 155 selects the pieces of normal data 30, 32, 33, and 35 as the pieces of normal data similar to the anomaly data 21.

For each of the pieces of normal data selected by the above-described processing, the generation unit 155 generates pseudo-anomaly data by combining the normal data with the anomaly data by linear combination with a proportion $\alpha$ as a uniform random number. For example, the generation unit 155 generates the pseudo-anomaly data by using $\alpha$-blending or the like. The generation unit 155 generates the pieces of pseudo-anomaly data 51 to 58 by executing the processing described in FIG. 2.

The generation unit 155 outputs features of the pieces of anomaly data, features of the pieces of normal data, and features of the pieces of pseudo-anomaly data to the label assignment unit 156.

The label assignment unit 156 executes clustering based on the features of the pieces of anomaly data, the features of the pieces of normal data, and the features of the pieces of pseudo-anomaly data, and assigns ground truth labels to the pieces of data in accordance with the clustering result. The label assignment unit 156 registers each piece of data to which the ground truth label is assigned, as the retraining data 144 in the storage unit 140. An example of the processing of the label assignment unit 156 will be described below. For the pieces of pseudo-anomaly data generated by $\alpha$-blending, the label assignment unit 156 also assigns ground truth labels and registers the pieces of pseudo-anomaly data in the retraining data 144.

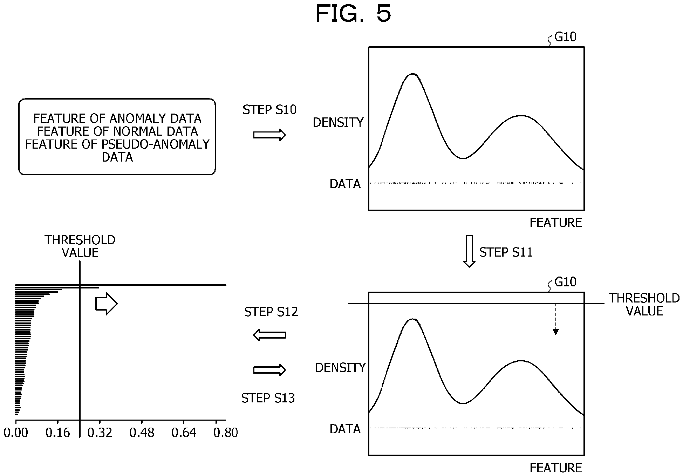

The clustering processing to be executed is executed by the label assignment unit 156. FIG. 5 is a diagram (1) for describing processing of the label assignment unit. The label assignment unit 156 generates a graph G10 in which a vertical axis represents a density and a horizontal axis represents a feature based on the features of the pieces of anomaly data, the features of the pieces of normal data, and the features of the pieces of pseudo-anomaly data (step S10). In a similar manner to the preliminary processing unit 153, the label assignment unit 156 calculates the density of the pieces of data (normal data and anomaly data including pseudo-anomaly data) based on Expression (1).

The label assignment unit 156 decreases the threshold value corresponding to the density by a predetermined value, and searches for a smallest threshold value at which the number of clusters is the same as the number of clusters recorded in advance in the cluster-related data 145 (step S11). It is assumed that the number of clusters recorded in advance in the cluster-related data 145 is "2".

The label assignment unit 156 executes persistent homology conversion (PH conversion) on a feature of data equal to or more than the threshold value, and refers to a zero-dimensional coupled component. The label assignment unit 156 calculates and specifies the cluster depending on whether or not the number of bars having a radius equal to or more than a predetermined threshold value coincides with the number of clusters set in advance (step S12).

In a case where the number of bars exceeding the threshold value does not coincide with the number of clusters in advance, the label assignment unit 156 decreases the threshold value by a predetermined value and repeats the processing (step S13).

As described above, the label assignment unit 156 repeats processing of extracting data of which the density is equal to or more than the threshold value by decreasing the threshold value of the density and processing of calculating the number of clusters by the PH conversion processing on the extracted data until the number of bars exceeding the threshold value coincides with the number of clusters in advance. In a case where the numbers of bars exceeding the threshold value coincides with the numbers of clusters, the label assignment unit 156 specifies center coordinates C1 and C2 of data regions where densities are equal to or more than the threshold value (density) at this time and records the specified center coordinates C1 and C2 in the cluster-related data 145. Whenever the clustering processing is performed, the label assignment unit 156 records the center coordinates in the cluster-related data 145.

The PH conversion executed by the label assignment unit 156 is, for example, the PH conversion described in PTL 1 (International Publication Pamphlet No. WO 2021/079442).

The label assignment unit 156 assigns the ground truth label to each piece of data included in the operation data 143 based on the result of the above-described clustering processing. For data of which the density determined by the clustering processing is equal to or more than the threshold value, the label assignment unit 156 generates the retraining data 144 by performing the ground truth label assignment based on the cluster to which each data belongs.

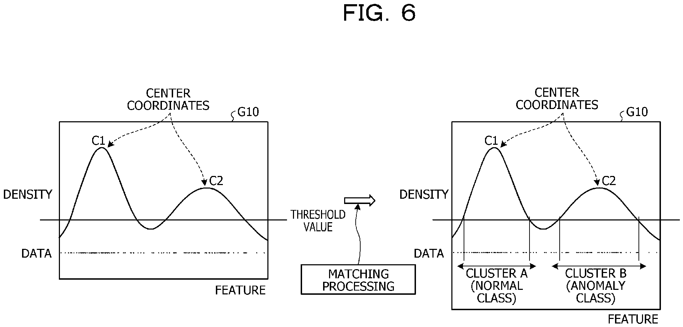

FIG. 6 is a diagram (2) for describing processing of the label assignment unit. Description related to a graph G10 of FIG. 6 is similar to the description related to the graph G10 in FIG. 5. The label assignment unit 156 specifies data equal to or more than a threshold value minimized in a state where the number of clusters is 2 and two center coordinates C1 and C2 by executing the above-described clustering processing. The label assignment unit 156 determines a cluster to which each of two center coordinates belongs based on a history of center coordinates recorded in the cluster-related data 145 and matching processing.

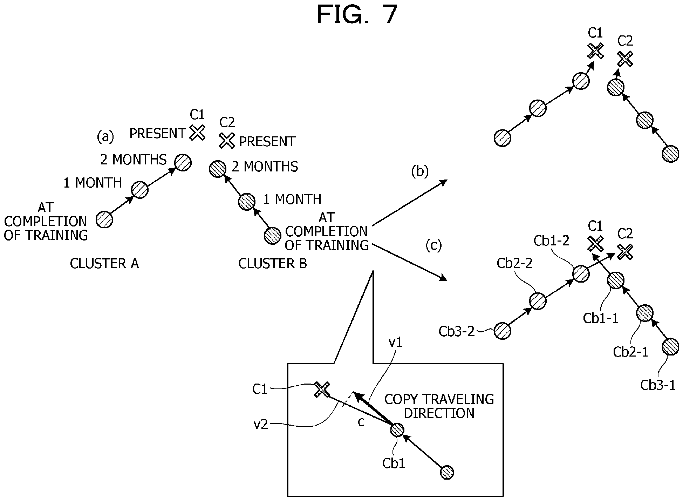

FIG. 7 is a diagram (3) for describing processing of the label assignment unit. An example of the matching processing will be described by using FIG. 7. The label assignment unit 156 maps, to the feature space, the center coordinates of each cluster specified from completion of the training of the machine learning model 142 to the present, estimates a traveling direction, and determines the cluster of each of two center coordinates (C1, C2) currently extracted.

Simply, in matching of closest center coordinates, it may not be appropriate to take a variation in the center coordinates into account. In a case where the center coordinates vary and new two points are newly matched as illustrated in (a) of FIG. 7, when matching is performed at close points, the center coordinates are obtained as illustrated in (b) of FIG. 7, but this movement is unnatural from a direction of variation. The variation illustrated in (c) of FIG. 7 is more natural.

Thus, the label assignment unit 156 introduces a correction distance. For example, the traveling direction is specified by introducing a mechanism of determining that the center coordinates are points closer to each other in a case where the center coordinates travel in the traveling direction and calculating an inner product of a traveling direction vector from previous coordinates and a vector coupling current coordinates from the previous coordinates. The label assignment unit 156 selects a nearest neighbor point by using, as the correction distance, a value obtained by multiplying a distance between two points by $(\tan(c) + 1)/2$ as a weight, where c denotes a value of the inner product. For example, a value obtained by multiplying a distance between center coordinates Cb1 and the center coordinates C1 by a weight $((\tan(c) + 1)/2)$ based on the inner product c of a vector v1 and a vector v2 becomes the correction distance.

Whenever the center coordinates of the cluster are specified, the label assignment unit 156 repeatedly executes processing of calculating the correction distance between the center coordinates and matching the center coordinates having close correction distances to each other.

For example, the center coordinates of the cluster A specified by the clustering result of the preliminary processing unit 153 are set as Cb3-1, and the center coordinates of the cluster B are set as Cb3-2. By the label assignment unit 156, when the center coordinates Cb3-1 and Cb2-1 are matched, the center coordinates Cb2-1 and Cb1-1 are matched, and the center coordinates Cb1-1 and C1 are matched, the center coordinates C1 are associated with the cluster A. According to the present embodiment, a class corresponding to the cluster A is referred to as a "normal class".

By the label assignment unit 156, when the center coordinates Cb3-2 and Cb2-2 are matched, the center coordinates Cb2-2 and Cb1-2 are matched, and the center coordinates Cb1-2 and C2 are matched, the center coordinates C2 are associated with the cluster B. According to the present embodiment, a class corresponding to the cluster B is referred to as an "anomaly class".

The description returns to FIG. 6. In the example illustrated in FIG. 6, the cluster A (normal class) is associated with the center coordinates C1. The cluster B (anomaly class) is associated with the center coordinates C2. In this case, among the pieces of data included in the operation data 143, the label assignment unit 156 sets a ground truth label "normal" for data of which the density is equal to or more than the threshold value and which belongs to the same cluster as the center coordinates C1. Among the pieces of data included in the operation data 143, the label assignment unit 156 sets a ground truth label "anomaly" for data of which the density is equal to or more than the threshold value and which belongs to the same cluster as the center coordinates C2.

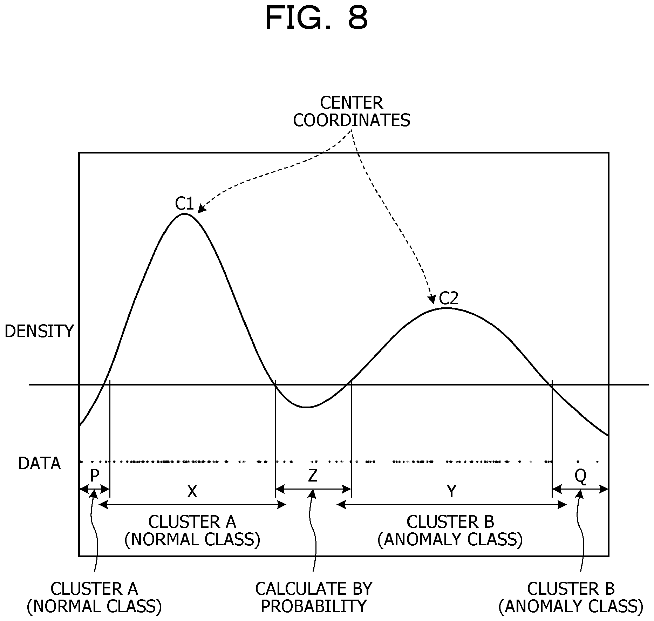

Subsequently, the label assignment unit 156 assigns a ground truth label to each piece of data less than the threshold value that is not extracted by the clustering processing. FIG. 8 is a diagram (4) for describing processing of the label assignment unit. For each piece of data not extracted, the label assignment unit 156 measures a distance of each cluster to the center coordinates C1 and a distance of each cluster to the center coordinates C2, and determines that the piece of data belongs to the closest cluster in a case where a second closest distance is larger than a maximum value of the distances between the centers of the clusters.

In the case of the example illustrated in FIG. 8, the label assignment unit 156 determines the cluster A for data in a region P outside a region X among regions other than the region X (cluster A) and a region Y (cluster B) where the clusters are determined by the above-described method. The label assignment unit 156 determines the cluster B for data in a region Q outside the region Y.

The label assignment unit 156 determines that pieces of data in a plurality of adjacent clusters are mixed for pieces of data in a region Z where the second closest distance is smaller than the maximum value of the distances between the centers of the clusters (in the middle of the plurality of clusters). In this case, the label assignment unit 156 measures and assigns a probability of each cluster for each piece of data. For example, for each piece of data belonging to the region Z, the label assignment unit 156 calculates a probability belonging to each cluster by using a k-nearest neighbors algorithm, a uniform probability method, a distribution ratio retention method, or the like, and generates and assigns a probabilistic label (a probability of the normal class, a probability of the anomaly class, and a probability of the another class).

For each piece of input data belonging to the region Z, the label assignment unit 156 extracts k pieces of data to which the label is already assigned and which is positioned in the vicinity of the piece of input data, and when the proportion for the pieces of input data are normal class = 0.6, anomaly class = 0.4, and another class = 0, the label assignment unit 156 assigns the proportion as the label.

For each piece of data belonging to the region Z, the label assignment unit 156 assigns the same probability to all the clusters. For example, the label assignment unit 156 assigns normal class = 0.5 and anomaly class = 0.5 as the label in the case of two class classification, and assigns normal class = 0.3, anomaly class = 0.3, another class = 0.3, and the like as the label in the case of three class classification.

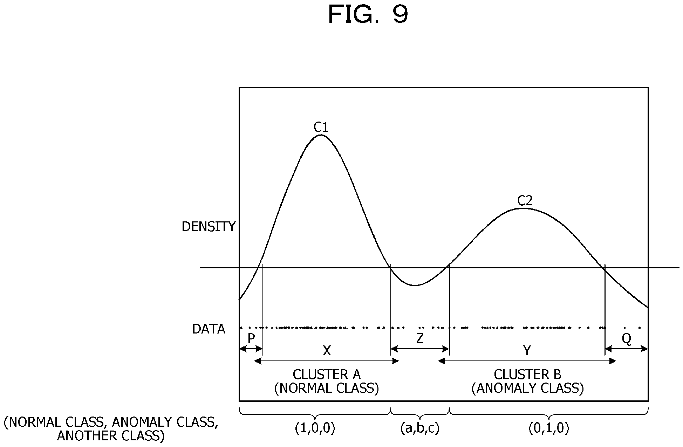

FIG. 9 illustrates information on the ground truth label estimated by the above-described method and assigned to each piece of data by the label assignment unit 156. FIG. 9 is a diagram (5) for describing processing of the label assignment unit. The estimated ground truth label is assigned by a probability of belonging to each cluster (a probability of belonging to the normal class, a probability of belonging to the anomaly class, or a probability of belonging to another class). As illustrated in FIG. 9, an estimated label (ground truth label) [1, 0, 0] is assigned to each piece of data in the region X and the region P, an estimated label [0, 1, 0] is assigned to each piece of input data in the region Y and the region Q, and an estimated label [a, b, c] is assigned to each piece of input data in the region Z. a, b, and c are probabilities calculated by the method such as k-nearest neighbors algorithm. The label assignment unit 156 stores, in the storage unit 140, the retraining data 144 in which each piece of data is associated with the estimated label.

The description returns to FIG. 3. The deterioration detection unit 157 detects accuracy deterioration of the machine learning model 142. For example, the deterioration detection unit 157 compares the determination result of the machine learning model 142 with the estimation result (the retraining data 144) generated by the label assignment unit 156, and detects the accuracy deterioration of the machine learning model 142.

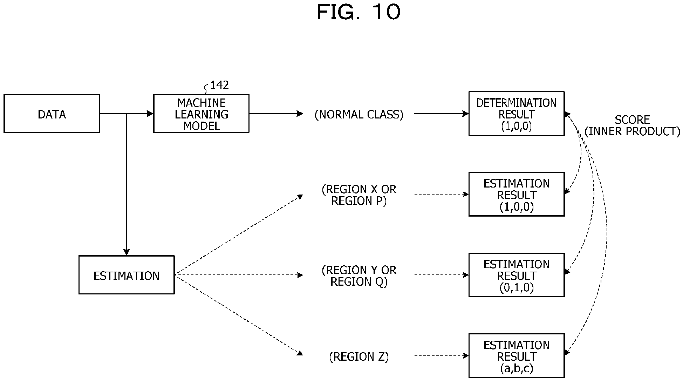

FIG. 10 is a diagram for describing deterioration determination of the deterioration detection unit. As illustrated in FIG. 10, the deterioration detection unit 157 generates a determination result [1, 0, 0] based on an output result (normal class) in a case where the pieces of data (the pieces of data of the operation data 143) are input to the machine learning model 142. By the above-described estimation processing on the data, the deterioration detection unit 157 acquires an estimation result [1, 0, 0] in a case where the data belongs to the region X or the region P, an estimation result [0, 1, 0] in a case where the data belongs to the region Y or the region Q, or an estimation result [a, b, c] in a case where the data belongs to the region Z.

For each piece of input data, the deterioration detection unit 157 acquires a determination result and an estimation result, and executes deterioration determination by comparing these results. For example, for a probability vector of each piece of data (each point) indicated by each estimation result, the deterioration detection unit 157 executes the deterioration determination by setting, as a score of the point, a sum (inner product) of component products in vector representation of the determination result by the machine learning model 142 and comparing a value obtained by dividing a sum of the scores by the number of pieces of data with a threshold value.

The deterioration detection unit 157 may execute the following processing to detect the accuracy deterioration of the machine learning model 142. With reference to the cluster-related data 145, the deterioration detection unit 157 calculates, as a score, an additive inverse of the distance between the center coordinates of the cluster A specified by the clustering processing of the training data 141 and the center coordinates of the cluster A specified by the clustering processing of the current operation data 143. In a case where the score is less than the threshold value, the deterioration detection unit 157 determines that the accuracy of the machine learning model 142 deteriorates.

In a case where the accuracy deterioration of the machine learning model 142 is detected, the deterioration detection unit 157 outputs a request to re-execute machine learning to the machine learning unit 152. In a case where the request to re-execute the machine learning is accepted from the deterioration detection unit 157, the machine learning unit 152 re-executes the machine learning of the machine learning model 142 by using the retraining data 144.

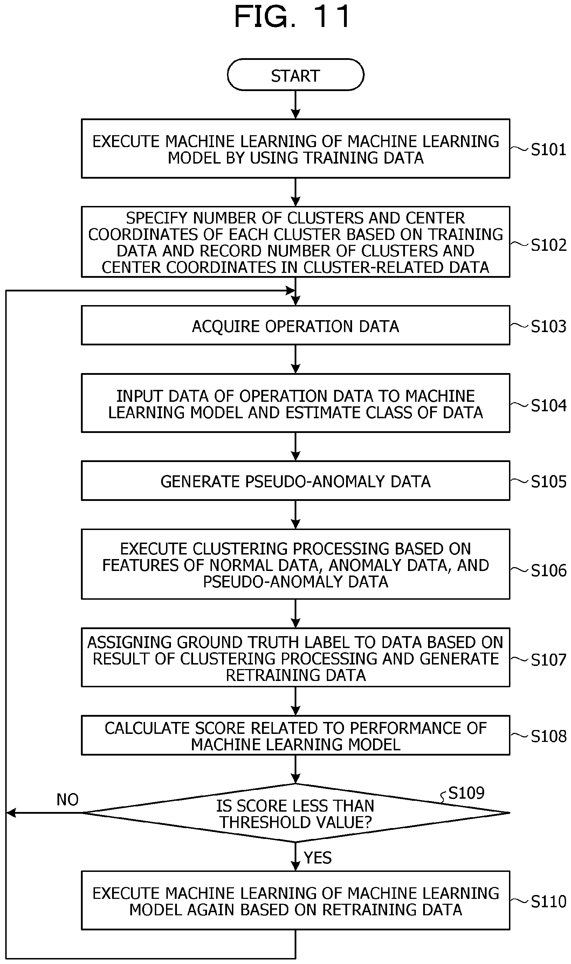

Next, a processing procedure of the machine learning apparatus 100 according to the present embodiment will be described. FIG. 11 is a flowchart illustrating the processing procedure of the machine learning apparatus according to the present embodiment. As illustrated in FIG. 11, the machine learning unit 152 of the machine learning apparatus 100 executes the machine learning of the machine learning model 142 by using the training data 141 (step S101).

Based on the training data 141, the preliminary processing unit 153 of the machine learning apparatus 100 specifies the number of clusters and the center coordinates of each cluster and records the specified number of clusters and center coordinates in the cluster-related data 145 (step S102). The acquisition unit 151 of the machine learning apparatus 100 acquires the operation data 143 and stores the acquired operation data 143 in the storage unit 140 (step S103).

The inference unit 154 of the machine learning apparatus 100 inputs the pieces of data of the operation data 143 to the machine learning model 142 and estimates the classes of the pieces of data (step S104). The generation unit 155 of the machine learning apparatus 100 generates pieces of anomaly pseudo data based on the features of the pieces of normal data and the features of the pieces of anomaly data (step S105).

The label assignment unit 156 of the machine learning apparatus 100 executes the clustering processing based on the features of the pieces of normal data, the pieces of anomaly data, and the pieces of pseudo-anomaly data (step S106). The label assignment unit 156 assigns, based on the result of the clustering processing, the ground truth labels to the pieces of data and generates the retraining data 144 (step S107).

The deterioration detection unit 157 of the machine learning apparatus 100 calculates a score related to performance of the machine learning model 142 (step S108). In a case where the score is not less than the threshold value (No in step S109), the machine learning apparatus 100 causes the processing to proceed to step S103. In a case where the score is less than the threshold value (Yes in step S109), the machine learning apparatus 100 causes the processing to proceed to step S110.

The machine learning unit 152 executes the machine learning of the machine learning model 142 again based on the retraining data 144 (step S110), and causes the processing to proceed to step S103.

Next, effects of the machine learning apparatus 100 according to the present embodiment will be described. The piece of data of the operation data 143 are input to the trained machine learning model 142, and thus, the machine learning apparatus 100 specifies the features of the pieces of normal data and anomaly data. The machine learning apparatus 100 generates the pieces of pseudo-anomaly data based on the features of the pieces of normal data and anomaly data, and executes clustering based on the features of the pieces of normal data, the pieces of anomaly data, and the pieces of pseudo-anomaly data. The machine learning apparatus 100 generates the retraining data 144 by assigning the ground truth label based on the clustering result to each piece of data of the operation data and the pseudo-anomaly data, and updates the parameter of the machine learning model based on the retraining data 144. As described above, the pieces of pseudo-anomaly data are generated based on the features of the pieces of normal data and the pieces of anomaly data, and thus, the ground truth labels may be automatically assigned in a case where the number of pieces of data belonging to a certain class is small.

As described above, the machine learning apparatus 100 may automatically generate the retraining data 144 by automatically assigning the ground truth labels, and may suppress the accuracy deterioration of the machine learning model 142 by executing the machine learning of the machine learning model 142 again by using the retraining data 144.

The machine learning apparatus 100 selects the pieces of normal data similar to the pieces of anomaly data in the feature space, and generates the pieces of pseudo-anomaly data between the pieces of anomaly data and the selected pieces of normal data. Accordingly, the distribution of the pieces of data in the feature space may be set to a distribution in which the ground truth labels may be automatically assigned.

Next, other kinds of processing (1) and (2) executed by the machine learning apparatus 100 will be described.

Another processing (1) will be described. Although the above-described machine learning apparatus 100 generates the pieces of pseudo-anomaly data based on the features of the pieces of normal data and the pieces of anomaly data in the feature space, the disclosure is not limited thereto. For example, the generation unit 155 of the machine learning apparatus 100 may duplicate the pieces of anomaly data among the pieces of data included in the operation data 143, and generate pieces of anomaly data obtained by adding noise such as Gaussian noise to the pieces of duplicated anomaly data. Hereinafter, the pieces of anomaly data to which noise is added are referred to as pieces of noise data.

The label assignment unit 156 of the machine learning apparatus 100 executes the clustering processing based on the features of the pieces of anomaly data, features of the pieces of noise data, and the features of the pieces of normal data, and assigns the ground truth labels to the pieces of data in accordance with the clustering result. The features of the pieces of noise data are features output from the layer a predetermined number of layers before the output layer of the machine learning model 142 in a case where the pieces of noise data are input to the trained machine learning model 142.

Another processing (2) will be described. Although the above-described machine learning apparatus 100 generates the pieces of pseudo-anomaly data in a case where there is a difference between the number of pieces of anomaly data and the number of pieces of normal data in the operation data 143, the disclosure is not limited thereto. Even in a case where there is a difference between the number of pieces of anomaly data and the number of pieces of normal data in the training data 141, the generation unit 155 of the machine learning apparatus 100 may generate the pieces of pseudo-anomaly data by using the features of the pieces of anomaly data and the features of the pieces of normal data in the training data 141 and use the pieces of pseudo-anomaly data for the machine learning of the machine learning model 142.

Next, a result of verifying performance by applying the machine learning apparatus 100 according to the present embodiment to anomaly detection artificial intelligence (AI) in a certain factory will be described. As a verification condition, the machine learning model 142 is trained in advance such that the machine learning model is the DNN and the pieces of data are classified into the pieces of anomaly data or the pieces of normal data.

As an assumption scenario during the operation, it becomes gradually dark due to a lifespan of a certification tool. Illuminance decreases by 10% for each batch. For each batch, 80 pieces of normal data and 5 pieces of anomaly data are acquired as the operation data.

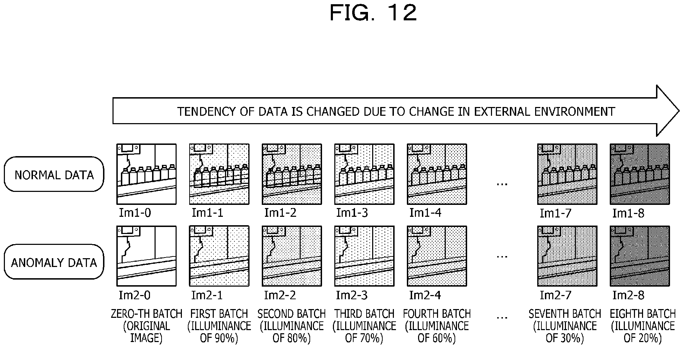

FIG. 12 is a diagram illustrating a change in tendency of data due to a change in an external environment. Pieces of normal data are denoted by Im1-0 to Im1-8. Pieces of anomaly data are Im2-0 to Im2-8. The normal data Im1-0 is normal data (original image data) of a zero-th batch. The anomaly data Im2-0 is anomaly data (original image data) of the zero-th batch.

The normal data Im1-1 is normal data (image having an illuminance of 90%) of a first batch. The anomaly data Im2-1 is anomaly data (image data having an illuminance of 90%) of the first batch. The normal data Im1-2 is normal data (image having an illuminance of 80%) of a second batch. The anomaly data Im2-2 is anomaly data (image data having an illuminance of 80%) of the second batch.

The normal data Im1-3 is normal data (image having an illuminance of 70%) of a third batch. The anomaly data Im2-3 is anomaly data (image data having an illuminance of 70%) of the third batch. The normal data Im1-4 is normal data (image having an illuminance of 60%) of a fourth batch. The anomaly data Im2-4 is anomaly data (image data having an illuminance of 60%) of the fourth batch.

Although not illustrated, the normal data Im1-5 is normal data (image having an illuminance of 50%) of a fifth batch. The anomaly data Im2-5 is anomaly data (image data having an illuminance of 50%) of the fifth batch. Although not illustrated, the normal data Im1-6 is normal data (image having an illuminance of 40%) of a sixth batch. The anomaly data Im2-6 is anomaly data (image data having an illuminance of 40%) of the sixth batch.

The normal data Im1-7 is normal data (image having an illuminance of 30%) of a seventh batch. The anomaly data Im2-7 is anomaly data (image data having an illuminance of 30%) of the seventh batch. The normal data Im1-8 is normal data (image having an illuminance of 20%) of an eighth batch. The anomaly data Im2-8 is anomaly data (image data having an illuminance of 20%) of the eighth batch.

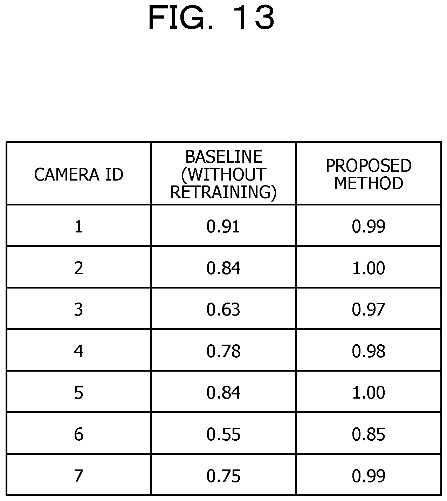

The data is input to the machine learning model, it is determined whether the input data is the normal data or the anomaly data, and an area under curve (AUC) score in each batch is calculated as an evaluation index. A higher AUC score indicates that the detection performance of the machine learning model is maintained. For an anomaly detection data set (operation data) of cameras (cameras IDs 1 to 7) at seven locations in a factory, AUC scores of an anomaly detection AI to which the machine learning apparatus 100 according to the present embodiment is applied and an anomaly detection AI for which retraining is not performed are verification results illustrated in FIG. 13.

FIG. 13 is a diagram (1) illustrating the verification results. The verification results in FIG. 13 indicate AUC scores in a final batch (eighth batch). A baseline indicates the anomaly detection AI for which retraining is not performed. A proposed method indicates the anomaly detection AI to which the machine learning apparatus 100 according to the present embodiment is applied. As illustrated in FIG. 13, in all the cameras, AUC scores of the proposed method are higher than AUC scores of the baseline, and the detection performance is maintained even in a dark state (the tendency of the data is changed).

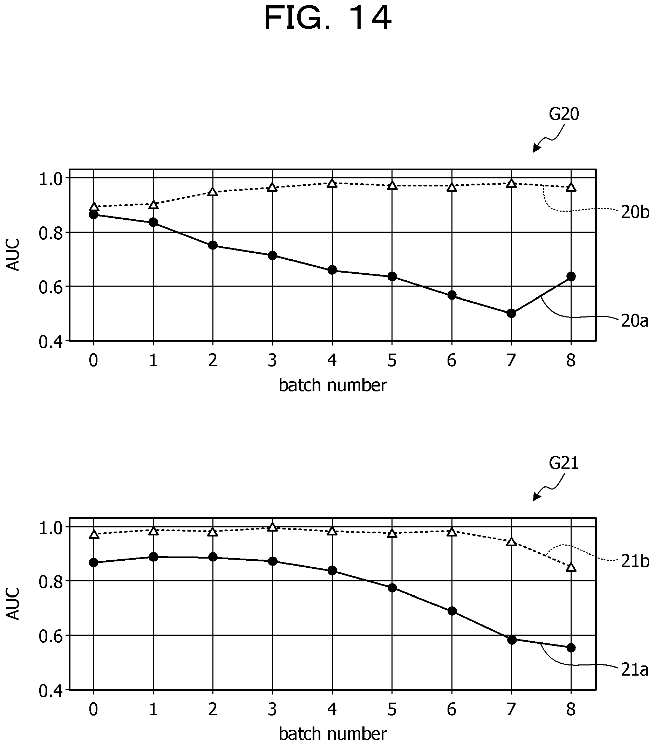

FIG. 14 is a diagram illustrating an example of changes in the AUC scores of the cameras. A graph G20 of FIG. 14 represents a change in the AUC score of the camera ID "3". A vertical axis of the graph G20 is an axis corresponding to the AUC score, and a horizontal axis is an axis corresponding to a batch number. A line segment 20a indicates the change in the AUC score in each batch of the baseline. A line segment 20b indicates the change in the AUC score in each batch in the proposed method.

A graph G21 of FIG. 14 represents a change in the AUC score of the camera ID "6". A vertical axis of the graph G21 is an axis corresponding to the AUC score, and a horizontal axis is an axis corresponding to the batch number. A line segment 21a indicates the change in the AUC score in each batch of the baseline. A line segment 21b indicates the change in the AUC score in each batch of the proposed method.

As illustrated in the graphs G20 and G21 of FIG. 14, the anomaly detection AI to which the machine learning apparatus 100 according to the present embodiment is applied maintains the detection performance even in the dark state.

Next, results of generating pieces of pseudo-anomaly data by generation methods (1) to (5) and verifying the performance of the machine learning model 142 will be described. As a precondition, it is assumed that pieces of data are classified into anomaly data or normal data, and the number of pieces of anomaly data is smaller than the number of pieces of normal data.

Pieces of identical anomaly data are duplicated.

(2) Noise data is generated by adding Gaussian noise (noise intensity: weak <standard deviation $\sigma = 0.01$>) to the anomaly data duplicated in (1).

(3) Noise data is generated by adding Gaussian noise (noise intensity: medium <standard deviation $\sigma = 0.1$>) to the anomaly data duplicated in (1).

(4) Noise data is generated by adding Gaussian noise (noise intensity: strong <standard deviation $\sigma = 1$>) to

the anomaly data duplicated in (1).

(5) Pseudo-anomaly data in which anomaly data and normal data similar to the anomaly data are combined is generated by $\alpha$-blending in the machine learning apparatus 100.

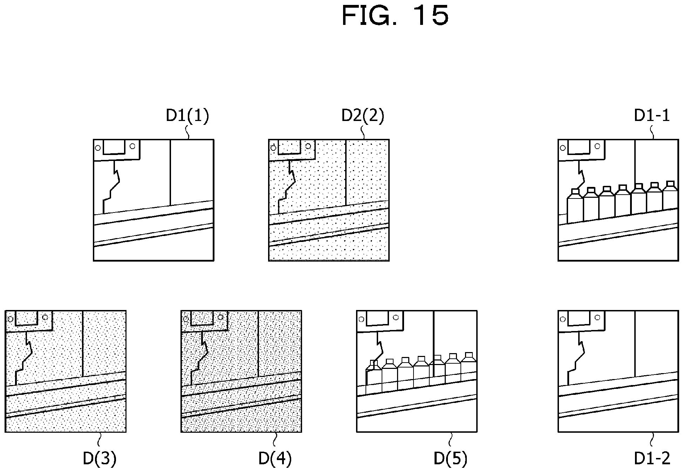

FIG. 15 is a diagram illustrating examples of pieces of data generated by different generation methods. Data D1-1 is normal data. Data D1-2 is anomaly data. Data D(1) is data generated by the generation method (1). Data D(2) is data generated by the generation method (2). Data D(3) is data generated by the generation method (3). Data D(4) is data generated by the generation method (4). Data D(5) is data generated by the generation method (5).

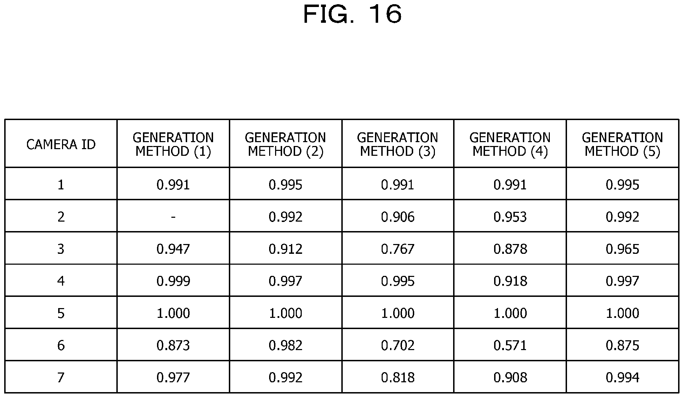

FIG. 16 is a diagram (2) illustrating the verification results. The verification results in FIG. 16 indicate average AUC scores for the respective camera IDs of all the batches in a case where the generation methods (1) to (5) are used. As illustrated in FIG. 16, compared with the other generation methods (1) to (4), the generation method (5) achieves performance maintenance with a highest AUC score or a second highest AUC score.

Although a case where the pieces of data are classified into the anomaly data or the normal data and the number of pieces of anomaly data is smaller than the number of pieces of normal data has been described as an example in the present embodiment, the present embodiment is also applicable to a case where the number of pieces of normal data is smaller than the number of pieces of anomaly data. Although a case where the pieces of data are classified into the anomaly data or the normal data has been described in the present embodiment, the disclosure is not limited thereto and the pieces of data may be classified into other classes.

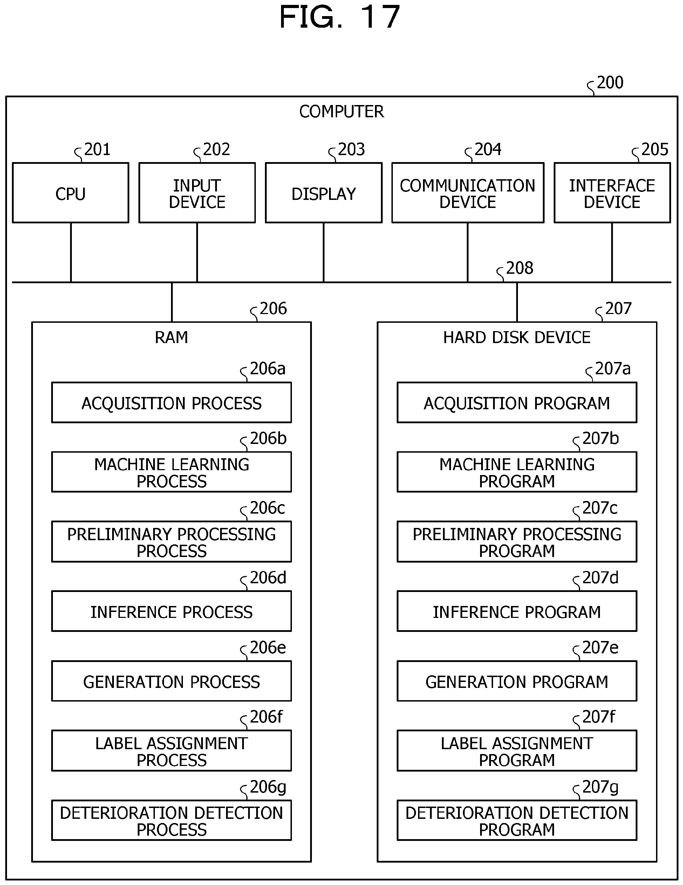

Next, description will be given for an example of a hardware configuration of a computer that implements functions similar to those of the machine learning apparatus 100 described in the above embodiment. FIG. 17 is a diagram illustrating an example of the hardware configuration of the computer that implements functions similar to those of the machine learning apparatus according to the embodiment.

As illustrated in FIG. 17, a computer 200 includes a central processing unit (CPU) 201 that executes various types of computation processing, an input device 202 that accepts input of data from a user, and a display 203. The computer 200 includes a communication device 204 that exchanges data with the external apparatus or the like via a wired or wireless network and an interface device 205. The computer 200 includes a random-access memory (RAM) 206 that temporarily stores various types of information and a hard disk device 207. Each of the devices 201 to 207 is coupled to a bus 208.

The hard disk device 207 includes an acquisition program 207a, a machine learning program 207b, a preliminary processing program 207c, an inference program 207d, a generation program 207e, a label assignment program 207f, and a deterioration detection program 207g. The CPU 201 reads each of the programs 207a to 207g and loads the program into the RAM 206.

The acquisition program 207a functions as an acquisition process 206a. The machine learning program 207b functions as a machine learning process 206b. The preliminary processing program 207c functions as a preliminary processing process 206c. The inference program 207d functions as an inference process 206d. The generation program 207e functions as a generation process 206e. The label assignment program 207f functions as a label assignment process 206f. The deterioration detection program 207g functions as a deterioration detection process 206g.

Processing of the acquisition process 206a corresponds to the processing of the acquisition unit 151. Processing of the machine learning process 206b corresponds to the processing of the machine learning unit 152. Processing of the preliminary processing process 206c corresponds to the processing of the preliminary processing unit 153. Processing of the inference process 206d corresponds to the processing of the inference unit 154. Processing of the generation process 206e corresponds to the processing of the generation unit 155. Processing of the label assignment process 206f corresponds to the processing of the label assignment unit 156. Processing of the deterioration detection process 206g corresponds to the processing of the deterioration detection unit 157.

Each of the programs 207a to 207g may not be stored in the hard disk device 207 from the beginning. For example, each program may be stored in a "portable physical medium", such as a flexible disk (FD), a compact disc read-only memory (CD-ROM), a Digital Versatile Disc (DVD), a magneto-optical disk, or an integrated circuit (IC) card, to be inserted into the computer 200. The computer 200 may read and execute each of the programs 207a to 207g.

CITATION LIST

PATENT LITERATURE

PTL 1: International Publication Pamphlet No. WO 2021/079442

REFERENCE SIGNS LIST

100    machine learning apparatus
110    communication unit
120    input unit
130    display unit
140    storage unit
141    training data
142    machine learning model
143    operation data
144    retraining data
145    cluster-related data
150    control unit
151    acquisition unit
152    machine learning unit
153    preliminary processing unit
154    inference unit
155    generation unit
156    label assignment unit
157    deterioration detection unit

**Claims**

1. A machine learning program for causing a computer to execute a process comprising:

   inputting a plurality of pieces of data to a machine learning model, and acquiring a plurality of prediction results of the plurality of pieces of data;
   generating one or more pieces of data based on first data of which the prediction result indicates a first group among the plurality of pieces of data;
   executing clustering of the plurality of pieces of data and the one or more pieces of data based on a plurality of features of the plurality of pieces of data and the one or more pieces of data, which are obtained based on a parameter of the machine learning model; and
   updating the parameter of the machine learning model based on training data including the plurality of pieces of data and the one or more pieces of data for which results of the clustering are used as ground truth labels.

2. The machine learning program according to claim 1, wherein the generating includes selecting pieces of second data similar to the first data among a first plurality of pieces of data of which the plurality of prediction results indicate a second group among the plurality of pieces of data, and generating the one or more pieces of data corresponding to a feature between a feature of the first data and a second feature of the second data.

3. The machine learning program according to claim 1, wherein the generating includes generating the one or more pieces of data by adding noise to third data obtained by duplicating the first data.

4. The machine learning program according to claim 1, the processing further comprising:
   determining whether or not to update the parameters of the machine learning model based on the prediction result and the ground truth label included in the training data.

5. A machine learning method implemented by a computer, the method comprising:

   inputting a plurality of pieces of data to a machine learning model, and acquiring a plurality of prediction results of the plurality of pieces of data;
   generating one or more pieces of data based on first data of which the prediction result indicates a first group among the plurality of pieces of data;
   executing clustering of the plurality of pieces of data and the one or more pieces of data based on a plurality of features of the plurality of pieces of data and the one or more pieces of data, which are obtained based on a parameter of the machine learning model; and
   updating the parameter of the machine learning model based on training data including the plurality of pieces of data and the one or more pieces of data for which results of the clustering are used as ground truth labels.

6. The machine learning method according to claim 5, wherein the generating includes selecting pieces of second data similar to the first data among a first plurality of pieces of data of which the plurality of prediction results indicate a second group among the plurality of pieces of data, and generating the one or more pieces of data corresponding to a feature between a feature of the first data and a second feature of the second data.

7. The machine learning method according to claim 5, wherein the generating includes generating the one or more pieces of data by adding noise to third data obtained by duplicating the first data.

8. The machine learning method according to claim 5, the method further comprising:
   determining whether or not to update the parameters of the machine learning model based on the prediction result and the ground truth label included in the training data.

9. A machine learning apparatus comprising a control unit configured to perform processing comprising:

   inputting a plurality of pieces of data to a machine learning model, and acquiring a plurality of prediction results of the plurality of pieces of data;
   generating one or more pieces of data based on first data of which the prediction result indicates a first group among the plurality of pieces of data;
   executing clustering of the plurality of pieces of data and the one or more pieces of data based on a plurality of features of the plurality of pieces of data and the one or more pieces of data, which are obtained based on a parameter of the machine learning model; and
   updating the parameter of the machine learning model based on training data including the plurality of pieces of data and the one or more pieces of data for which results of the clustering are used as ground truth labels.

10. The machine learning apparatus according to claim 9, wherein the generating includes selecting pieces of second data similar to the first data among a first plurality of pieces of data of which the plurality of prediction results indicate a second group among the plurality of pieces of data, and generating the one or more pieces of data corresponding to a feature between a feature of the first data and a second feature of the second data.

11. The machine learning apparatus according to claim 9, wherein the generating includes generating the one or more pieces of data by adding noise to third data obtained by duplicating the first data.

12. The machine learning apparatus according to claim 9, the processing further comprising:
    determining whether or not to update the parameters of the machine learning model based on the prediction result and the ground truth label included in the training data.

FIG. 1

# FIG. 2

STEP S1

STEP S2

# FIG. 3

MACHINE LEARNING APPARATUS — 100

CONTROL UNIT — 150

STORAGE UNIT — 140

COMMUNICATION UNIT — 110

INPUT UNIT — 120

DISPLAY UNIT — 130

ACQUISITION UNIT — 151

MACHINE LEARNING UNIT — 152

PRELIMINARY PROCESSING UNIT — 153

INFERENCE UNIT — 154

GENERATION UNIT — 155

LABEL ASSIGNMENT UNIT — 156

DETERIORATION DETECTION UNIT — 157

TRAINING DATA — 141

MACHINE LEARNING MODEL — 142

OPERATION DATA — 143

RETRAINING DATA — 144

CLUSTER-RELATED DATA — 145

# FIG. 4

141

| ITEM NUMBER | DATA (IMAGE DATA) | GROUND TRUTH LABEL |
|---|---|---|
| 1 | IMAGE DATA WITH ITEM NUMBER "1" | NORMAL |
| 2 | IMAGE DATA WITH ITEM NUMBER "2" | NORMAL |
| 3 | IMAGE DATA WITH ITEM NUMBER "3" | ANOMALY |
| 4 | IMAGE DATA WITH ITEM NUMBER "4" | NORMAL |
| ... | ... | ... |

# FIG. 5

# FIG. 6

CENTER
COORDINATES
G10

C1
DENSITY
C2
DATA
FEATURE

THRESHOLD
VALUE

MATCHING
PROCESSING

CENTER
COORDINATES
G10

C1
DENSITY
C2
DATA
CLUSTER A
(NORMAL
CLASS)
CLUSTER B
(ANOMALY
CLASS)
FEATURE

# FIG. 8

CENTER COORDINATES

C1

C2

DENSITY

DATA

P

X

Z

Y

Q

CLUSTER A
(NORMAL CLASS)

CLUSTER B
(ANOMALY CLASS)

CLUSTER A
(NORMAL CLASS)

CALCULATE BY
PROBABILITY

CLUSTER B
(ANOMALY CLASS)

FIG. 9

FIG. 10

# FIG. 11

START

↓

EXECUTE MACHINE LEARNING OF MACHINE LEARNING MODEL BY USING TRAINING DATA ～S101

↓

SPECIFY NUMBER OF CLUSTERS AND CENTER COORDINATES OF EACH CLUSTER BASED ON TRAINING DATA AND RECORD NUMBER OF CLUSTERS AND CENTER COORDINATES IN CLUSTER-RELATED DATA ～S102

↓

ACQUIRE OPERATION DATA ～S103

↓

INPUT DATA OF OPERATION DATA TO MACHINE LEARNING MODEL AND ESTIMATE CLASS OF DATA ～S104

↓

GENERATE PSEUDO-ANOMALY DATA ～S105

↓

EXECUTE CLUSTERING PROCESSING BASED ON FEATURES OF NORMAL DATA, ANOMALY DATA, AND PSEUDO-ANOMALY DATA ～S106

↓

ASSIGNING GROUND TRUTH LABEL TO DATA BASED ON RESULT OF CLUSTERING PROCESSING AND GENERATE RETRAINING DATA ～S107

↓

CALCULATE SCORE RELATED TO PERFORMANCE OF MACHINE LEARNING MODEL ～S108

↓

IS SCORE LESS THAN THRESHOLD VALUE? S109 —NO→

↓ YES

EXECUTE MACHINE LEARNING OF MACHINE LEARNING MODEL AGAIN BASED ON RETRAINING DATA ～S110

FIG. 12

TENDENCY OF DATA IS CHANGED DUE TO CHANGE IN EXTERNAL ENVIRONMENT

NORMAL DATA

Im1-0  Im1-1  Im1-2  Im1-3  Im1-4  ...  Im1-7  Im1-8

ANOMALY DATA

Im2-0  Im2-1  Im2-2  Im2-3  Im2-4  ...  Im2-7  Im2-8

ZERO-TH BATCH (ORIGINAL IMAGE)  FIRST BATCH (ILLUMINANCE OF 90%)  SECOND BATCH (ILLUMINANCE OF 80%)  THIRD BATCH (ILLUMINANCE OF 70%)  FOURTH BATCH (ILLUMINANCE OF 60%)  ...  SEVENTH BATCH (ILLUMINANCE OF 30%)  EIGHTH BATCH (ILLUMINANCE OF 20%)

# FIG. 13

| CAMERA ID | BASELINE (WITHOUT RETRAINING) | PROPOSED METHOD |
|---|---|---|
| 1 | 0.91 | 0.99 |
| 2 | 0.84 | 1.00 |
| 3 | 0.63 | 0.97 |
| 4 | 0.78 | 0.98 |
| 5 | 0.84 | 1.00 |
| 6 | 0.55 | 0.85 |
| 7 | 0.75 | 0.99 |

# FIG. 14

# FIG. 15

D1(1)

D2(2)

D1-1

D(3)

D(4)

D(5)

D1-2

FIG. 16

| CAMERA ID | GENERATION METHOD (1) | GENERATION METHOD (2) | GENERATION METHOD (3) | GENERATION METHOD (4) | GENERATION METHOD (5) |
|---|---|---|---|---|---|
| 1 | 0.991 | 0.995 | 0.991 | 0.991 | 0.995 |
| 2 | - | 0.992 | 0.906 | 0.953 | 0.992 |
| 3 | 0.947 | 0.912 | 0.767 | 0.878 | 0.965 |
| 4 | 0.999 | 0.997 | 0.995 | 0.918 | 0.997 |
| 5 | 1.000 | 1.000 | 1.000 | 1.000 | 1.000 |
| 6 | 0.873 | 0.982 | 0.702 | 0.571 | 0.875 |
| 7 | 0.977 | 0.992 | 0.818 | 0.908 | 0.994 |

# FIG. 17

200

## COMPUTER

| 201 | 202 | 203 | 204 | 205 |
|---|---|---|---|---|
| CPU | INPUT DEVICE | DISPLAY | COMMUNICATION DEVICE | INTERFACE DEVICE |

208

### RAM 206

| 206a | ACQUISITION PROCESS |
| 206b | MACHINE LEARNING PROCESS |
| 206c | PRELIMINARY PROCESSING PROCESS |
| 206d | INFERENCE PROCESS |
| 206e | GENERATION PROCESS |
| 206f | LABEL ASSIGNMENT PROCESS |
| 206g | DETERIORATION DETECTION PROCESS |

### HARD DISK DEVICE 207

| 207a | ACQUISITION PROGRAM |
| 207b | MACHINE LEARNING PROGRAM |
| 207c | PRELIMINARY PROCESSING PROGRAM |
| 207d | INFERENCE PROGRAM |
| 207e | GENERATION PROGRAM |
| 207f | LABEL ASSIGNMENT PROGRAM |
| 207g | DETERIORATION DETECTION PROGRAM |

# FIG. 18

# FIG. 19

# FIG. 20

## INTERNATIONAL SEARCH REPORT

| International application No. |
| --- |
| **PCT/JP2021/035678** |

| A. | CLASSIFICATION OF SUBJECT MATTER |
| --- | --- |

*G06N 20/00*(2019.01)i
FI:   G06N20/00

According to International Patent Classification (IPC) or to both national classification and IPC

| B. | FIELDS SEARCHED |
| --- | --- |

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/079442 A1 (FUJITSU LIMITED) 29 April 2021 (2021-04-29) entire text, all drawings | 1-12 |
| A | JP 2021-57042 A (SAMSUNG DISPLAY CO LTD) 08 April 2021 (2021-04-08) paragraphs [0022]-[0055], fig. 1-5 | 1-12 |
| A | WO 2021/059509 A1 (NEC CORP) 01 April 2021 (2021-04-01) paragraphs [0017], [0046]-[0060], fig. 6-14 | 1-12 |
| A | MORE, Ajinkya. Survey of resampling techniques for improving classification performance in unbalanced datasets. arXiv.org [online]. arXiv:1608.06048v1. Cornell University. 2016, [retrieval date 02 December 2021], Internet:<URL: https://arxiv.org/pdf/1608.06048v1> "4.5.4 Borderline-SMOTE2" | 2, 6, 10 |
| A | WO 2018/134952 A1 (SHIMADZU CORP) 26 July 2018 (2018-07-26) abstract, paragraphs [0005]-[0008] | 3, 7, 11 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 December 2021** | **14 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2021/035678** |

| Patent document cited in search report | Publication date (day/month/year) | Patent family member(s) | Publication date (day/month/year) |
| --- | --- | --- | --- |
| WO 2021/079442 A1 | 29 April 2021 | (Family: none) | |
| JP 2021-57042 A | 08 April 2021 | EP 3800588 A1 paragraphs [0021]-[0054], fig. 1-5 US 2021/0097400 A1 CN 112598017 A KR 10-2021-0039927 A TW 202129528 A | |
| WO 2021/059509 A1 | 01 April 2021 | (Family: none) | |
| WO 2018/134952 A1 | 26 July 2018 | US 2020/0065699 A1 abstract, paragraphs [0005]-[0 008] EP 3572805 A1 CN 110214271 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021079442 A